# EUROPEAN PATENT APPLICATION

(11) **EP 4 383 667 A1**
(43) Date of publication of application: **12.06.2024**
(21) Application number: 22851914.6
(22) Date of filing: 21.07.2022
(51) Int. Cl.: H04L 43/00

(54) **INFORMATION VERIFICATION METHOD AND DEVICE, STORAGE MEDIUM, AND ELECTRONIC DEVICE**

(30) Priority: 06.08.2021 CN 202110903278
(71) Applicant: ZTE Corporation, Shenzhen, Guangdong 518057 (CN)
(72) Inventor: LIU, Yao, Shenzhen, Guangdong 518057 (CN)
(74) Representative: Deambrogi, Edgardo
(86) International application number: PCT/CN2022/107005
(87) International publication number: WO 2023/011200

(57) **Abstract**

Embodiments of the present disclosure provide an information verification method and device, a storage medium, and an electronic device. The method includes: receiving a verification request message, wherein the verification request message includes an address to be verified and attribute information; and verifying the attribute information based on the address to be verified, and sending a verification result message. By adopting the technical solution, an address to be verified and attribute information associated with the address to be verified are carried in a verification request message, so that a node can locally verify the attribute information associated with the address to be verified, thereby verifying the consistency between control plane information and data plane information, and solving the problem in the related art that there is no mechanism for detecting and verifying associated attributes locally at a node in a network.

## Description

### Cross-Reference to Related Application

The present disclosure is based on and claims priority to Chinese Patent Application No. CN202110903278.X filed on August 06, 2021 and entitled "INFORMATION VERIFICATION METHOD AND DEVICE, STORAGE MEDIUM, AND ELECTRONIC DEVICE", the disclosure of which is incorporated herein by reference in its entirety.

### Technical Field

Embodiments of the present disclosure relate to the field of communications, and in particular, to an information verification method and device, a storage medium, and an electronic device.

### Background

Segment Routing (SR) is a routing method based on a source address. Segment Routing Header (SRH) is carried in a packet header of a Multi-Protocol Label Switching (MPLS) network or an Internet Protocol Version 6 (IPv6) packet header. A series of instruction operations (also referred to as segment operations) are carried in the SRH for routing and transmission of data in the network.

Segment Routing over IPv6 dataplane (SRv6) Segment is a 128-bit IPv6 address, and is also referred to as SRv6 Segment Identifier (SRv6 SID or SID for short). The concept of network programming is introduced into the SRv6. The SRv6 SID is a network instruction, and is composed of several parts including Locator, Function, and optional Argument. The Locator is mainly used for achieving a routing function, and therefore needs to be unique in an SR domain. The Function may identify any function of a device, for example, a certain forwarding behavior. The Argument carries parameters.

With the development and evolution of networks, an Internet Protocol (IP) address and an SRv6 SID can still inherit original attributes of routing and forwarding that an IP address has, and is additionally associated with other attributes (such as services/resources) related to a node. Such an association relationship can be locally maintained in the node, and may generally be advertised to other nodes or controllers. In this scenario, when operation maintenance or fault location is performed on the network, in addition to detecting accessibility of an IP address or tracking a forwarding path, it is also necessary to further verify whether the SID/IP address and other attributes of the SID/IP address locally maintained on the node are consistent with expectations, that is, it is necessary to verify whether the control plane information is consistent with the data plane information. However, in networks such as Internet Protocol version 4 (IPv4)/IPv6/SRv6, there is no corresponding detection and verification mechanism.

### Summary

Embodiments of the present disclosure provide an information verification method and device, a storage medium, and an electronic device, which may at least solve the problem in the related art that there is no mechanism for detecting and verifying associated attributes locally at a node in a network.

According to one or more embodiments of the present disclosure, an information verification method is provided, including: receiving a verification request message, wherein the verification request message includes an address to be verified and attribute information; and verifying the attribute information based on the address to be verified, and sending a verification result message.

According to another embodiment of the present disclosure, an information verification method is provided, including: sending a verification request message, wherein the verification request message includes an address to be verified and attribute information; and receiving a verification result message returned after the attribute information is verified based on the address to be verified.

According to another embodiment of the present disclosure, an information verification device is provided, including: a reception module, configured to receive a verification request message, wherein the verification request message includes an address to be verified and attribute information; and a verification module, configured to verify the attribute information based on the address to be verified, and send a verification result message.

According to another embodiment of the present disclosure, an information verification device is provided, including: a sending module, configured to send a verification request message, wherein the verification request message includes an address to be verified and attribute information; and a reception module, configured to receive a verification result message returned after the attribute information is verified based on the address to be verified.

According to still another embodiment of the present disclosure, there is provided a computer-readable storage medium, in which a computer program is stored, wherein the computer program, when executed by a processor, causes the processor to implement the operations of the method in any one of the foregoing embodiments and exemplary embodiments.

According to still another embodiment of the present disclosure, there is provided an electronic device, including a memory, a processor and a computer program stored on the memory and capable of running on the processor, wherein the processor, when executing the computer program, implements the operations of the method of any of the foregoing embodiments and exemplary embodiments.

According to the information verification solution in the embodiments of the present disclosure, an address to be verified and attribute information associated with the address to be verified are carried in a verification request message, so that a node can locally verify the attribute information associated with the address to be verified, thereby verifying the consistency between the control plane information and the data plane information, and solving the problem in the related art that there is no mechanism for detecting and verifying associated attributes locally at a node in a network.

### Brief Description of the Drawings

Fig. 1 is a block diagram of the hardware structure of a node for implementing an information verification method according to one or more embodiments of the present disclosure;
Fig. 2 is a flowchart of an information verification method according to one or more embodiments of the present disclosure;
Fig. 3 is a flowchart of another information verification method according to one or more embodiments of the present disclosure;
Fig. 4 is a first exemplary flowchart of another information verification method according to one or more embodiments of the present disclosure;
Fig. 5 is a second exemplary flowchart of another information verification method according to one or more embodiments of the present disclosure;
Fig. 6 is a structural block diagram of an information verification device according to one or more embodiments of the present disclosure;
Fig. 7 is a structural block diagram of another information verification device according to one or more embodiments of the present disclosure;
Fig. 8 is a flowchart of an information verification method according to a first exemplary implementation;
Fig. 9 is an exemplary processing flowchart after a receiving node receives a verification request message according to the first exemplary implementation;
Fig. 10 is a schematic diagram of an extension header of an extended ICMP message according to a second exemplary implementation;
Fig. 11 is a schematic diagram of an extension object of an extended ICMP message according to a second exemplary implementation;
Fig. 12 is a schematic diagram of an ICMP extension object corresponding to a slice identifier according to a second exemplary implementation;
Fig. 13 is a schematic diagram of an ICMP extension structure carrying multiple pieces of attribute information according to a second exemplary implementation;
Fig. 14 is a schematic diagram of an extended ICMPv4/ICMPv6 message according to a second exemplary implementation;
Fig. 15 is a schematic diagram of an ICMP message directly carrying verification information according to a second exemplary implementation;
Fig. 16 is a schematic diagram of a generic ICMP message structure according to a second exemplary implementation;
Fig. 17 is a schematic diagram of an extended IPv6 routing header TLV according to a fourth exemplary implementation;
Fig. 18 is a schematic diagram of an extended hop-by-hop option and destination option according to a fourth exemplary implementation;
Fig. 19 is a schematic diagram of a service chain scenario according to a sixth exemplary implementation;
Fig. 20 is a schematic diagram of a complete verification request message according to a sixth exemplary implementation;
Fig. 21 is a schematic diagram of a complete error message according to a sixth exemplary implementation;
Fig. 22 is a schematic diagram of a flexible algorithm path according to one or more embodiments of the present disclosure;
Fig. 23 is a schematic diagram of carrying algorithm information in a DOH according to a seventh exemplary implementation;
Fig. 24 is a schematic diagram of SRv6 IPv4 verification information according to an eighth exemplary implementation, which presents an extended message taking a message being carried in ICMP as an example;
Fig. 25 is a schematic diagram of SRv6 IPv4 VPN networking according to an eighth exemplary implementation; and
Fig. 26 is a schematic diagram of a TLV format carrying verification information according to a ninth exemplary implementation.

### Detailed Description

With the development and evolution of networks, an Internet Protocol (IP) address and an SRv6 SID can still inherit original attributes of routing and forwarding that an IP address has, and is additionally associated with other attributes (such as services/resources) related to a node. Some possible associated attributes are listed below. It should be noted that the following listed associated attributes are not exhaustive of all possible associated attributes. With the introduction of new requirements and the evolution of standards, more types of associated attributes may be involved.

The function part in SRv6 SID carries a value of a function representing a true network programming function type. A node locally records the correspondence concerning the network programming function type, and may additionally advertise such correspondence to other objects such as nodes or controllers through a control plane protocol, etc. It is defined in draft-ietf-lsr-isis-srvo-extension and draft-ietf-lsr-ospfv3-srv6-extensions-02 that when an SRv6 SID is advertised in an IGP, a network programming function type code may be advertised together with the SRv6 SID. The network programming function type code is defined in the standard. After receiving the advertisement message, other nodes can learn a network programming function corresponding to the SRv6 SID according to the network programming function type code.

The concept of SR service programming is introduced in draft-ietf-spring-sr-service-programming. By virtue of SR service programming, a Service Function (SF) is associated with an SID, and the SID is referred to as Service SID. By containing respective service SID in a segment list and with reference to other types of SIDs, a service path can be designated and SR service programming can be completed, thereby realizing the function of a service chain. For a service function that does not support SR, an SR proxy needs to be used to complete the service function, and in this case, the SID is allocated to the SR proxy. The SID may itself also have network programming capabilities.

In addition to being stored locally in the node, the correspondence between the SID and the SF or SR proxy network programming function may additionally be advertised to other objects such as nodes or controllers by means of a control plane protocol or the like. For example, it is defined in draft-dawra-idr-bgp-ls-sr-service-segments-05 that information such as SF type is advertised together with the SID.

The concept of network slicing is proposed in the 5G network architecture. By means of network slicing, an operator can build a plurality of dedicated, virtualized and isolated logical networks on a universal physical platform, so as to satisfy different requirements of different customers on network capabilities. Network slices are logically independent virtual network structures formed through the combination of network functions. The identity (ID) of a network slice may be referred to as a slice identifier or a slice ID. SR is one of the options to implement network slicing. In an SR network, different SIDs are associated with different slices/resources (nodes, links, etc.). In addition to being stored locally in the node, the association relationship between the SID and the slices/resources may additionally be advertised to other objects such as nodes or controllers through a control plane protocol or other modes.

It is proposed in draft-hegde-spring-mpls-seamless-sr/draft-dskc-bess-bgp-car-condition-state that a bearer network should be able to provide an intent-based cross-domain forwarding solution, and the intent represents a condition that a path is required to meet, for example, a path may be required to meet a certain delay requirement, or may be required to exclude a specific link. Packets to the same destination address may correspond to different forwarding paths due to different intents. In addition to being recorded locally by the node, the mapping between the address and the intent may also be advertised to other objects such as other nodes or controllers by means of a control plane protocol or the like. It should be noted that the intent may have a plurality of expressions according to the specific solutions, for example, a transport class ID field is defined in draft-kaliraj-idr-bgp-classful-transport-planes to indicate a path intent, which is advertised with an IP address prefix, and a color field is used in draft-dskc-bess-bgp-car to indicate a path intent, which is advertised with an IP address prefix.

A manner of supporting a VPN service in an SRv6 network is introduced in draft-ietf-bess-srv6-services. Similar to allocating an MPLS label to a VPN service in MPLS, an SRv6 SID is allocated to a VPN service in SRv6, and at the same time, with regard to different VPN services, due to different actions of forwarding table entry lookup, the VPN services may correspond to different network programming functions, such as End.DX4, End.DX4, End.DX6, End.DT6, etc.; therefore, on a Provider Edge (PE) node, an SRv6 SID may be simultaneously associated with a network programming function and a VPN service, and all these pieces of information will be advertised through a routing protocol, such as Border Gateway Protocol (BGP).

draft-ietf-lsr-flex-ago puts forward the concept of "flexible algorithm", which expands a path computation method in Interior Gateway Protocol (IGP), and a correspondence between a local SR-MPLS/SRv6 SID of the node and a specific algorithm will also be advertised through the IGP. draft-ietf-lsr-ip-flexalgo further extends the usage range of the flexible algorithm from the SR to the pure IP network, a local IPv4/IPv6 address of the node is associated with a specific algorithm, and the correspondence is advertised through the IGP.

According to draft-ietf-lsr-isis-sr-vtn-mt, the SR SID may also be associated with an IGP Multi-Topology ID (MT-ID), and the association is advertised through the IGP.

An IP address and an SRv6 SID can still inherit original attributes of routing and forwarding that an IP address has, and is additionally associated with other attributes, such as slice identifier, algorithm, network programming function, service function information, etc., and these attributes may also be advertised with the control plane; therefore, it is necessary to verify whether the control plane data is consistent with the data plane data. However, in networks such as IP/SRv6, there is no corresponding mechanism.

In conclusion, the address and other attributes (such as services/resources) related to the node are associated with each other, and in addition to being locally maintained in the node, such an association relationship is generally advertised to other nodes or controllers. In this scenario, when operation maintenance or fault location is performed on the network, in addition to detecting accessibility of an IP address or tracking a forwarding path, it is also necessary to further verify whether the SID/IP address and other attributes of the SID/IP address locally maintained on the node are consistent with expectations, that is, it is necessary to verify whether the control plane information is consistent with the data plane information. However, in networks such as IPv4/IPv6/SRv6, there is no corresponding detection and verification mechanism.

In view of the problem in the related art that there is no mechanism for detecting and verifying associated attributes locally at a node in a network, the embodiments of the present disclosure provide an information verification method and device, a storage medium, and an electronic device, so as to verify whether control plane information is consistent with data plane information.

The embodiments of the present disclosure will be described below in detail with reference to the accompanying drawings and in conjunction with embodiments.

It should be noted that, terms such as "first" and "second" in the description, claims, and accompanying drawings of the present disclosure are used to distinguish similar objects, but are not necessarily used to describe a specific sequence or order.

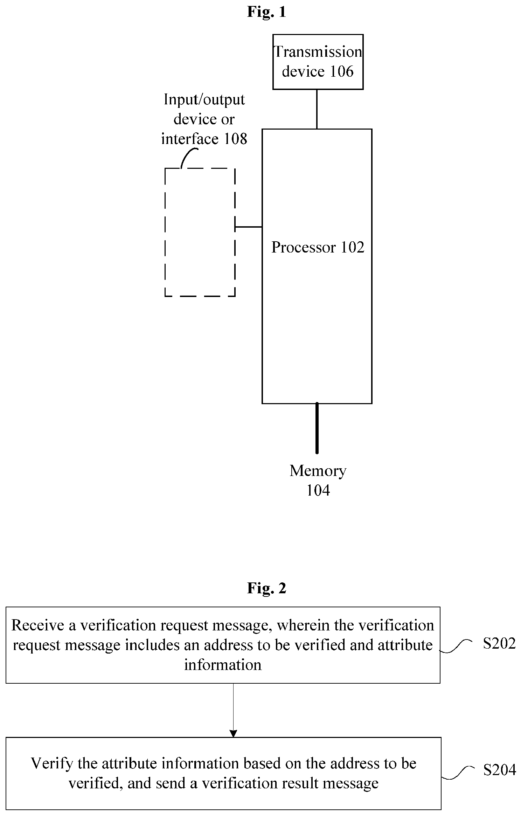

The method provided in the embodiments of the present application may be executed in a node of a network. Taking implementation of the method in a general node in a network as an example, Fig. 1 is a block diagram of the hardware structure of a node for implementing an information verification method according to one or more embodiments of the present disclosure. As shown in Fig. 1, the node may include one or more (only one is shown in Fig. 1) processors 102 and a memory 104 configured to store data, and the node may further include a transmission device 106 and an input/output device or interface 108 configured to perform a communication function. A person having ordinary skill in the art may understand that the structure shown in Fig. 1 is merely exemplary, and does not limit the structure of the foregoing nodes. For example, the node may also include more or fewer components than shown in Fig. 1, or have a different configuration than shown in Fig. 1.

The memory 104 may be configured to store a computer program, for example, a software program and a module of application software, such as a computer program corresponding to the information verification method in the embodiments of the present disclosure. The processor 102 runs the computer program stored in the memory 104, so as to execute various function applications and data processing, that is, to implement the information verification method. The memory 104 may include high-speed random access memory, and may also include non-volatile memory, such as one or more magnetic storage devices, flash memory, or other non-volatile solid-state memory. In some examples, the memory 104 may further include memory remotely located with respect to the processor 102, which may be connected to the node over a network. Examples of such networks include, but are not limited to, the Internet, intranets, local area networks, mobile communication networks, and combinations thereof.

The transmission device 106 is configured to receive or transmit data via a network. Specific examples of the described network may include a wireless network provided by a communication provider of the node.

The embodiments of the present disclosure provide an information verification method performed by a node operating in a network. Fig. 2 is a flowchart of an information verification method according to one or more embodiments of the present disclosure. As shown in Fig. 2, the method includes operations S202 and S204, which are respectively described in detail below.

In operation S202, a verification request message is received, wherein the verification request message includes an address to be verified and attribute information.

In an exemplary embodiment, the verification request message includes one or more addresses to be verified, and types of the addresses to be verified include an Internet Protocol (IP) address and/or a Segment Routing over IPv6 dataplane (SRv6). When the verification request message includes one address to be verified, single-node verification of the attribute information may be initiated for a node corresponding to the address. In a case where the verification request message includes multiple addresses (for example, in the form of an address list), multi-node verification of the attribute information may be initiated for nodes corresponding to the multiple addresses. Regardless of single-node verification or multi-node verification, the attribute information to be verified may be one or more pieces of attribute information. In the case of multi-node verification, according to whether the attribute information to be verified for different nodes is the same, the verification may be further divided into:
multi-node identical information verification, i.e., attribute information to be verified for different nodes is the same, when there are multiple addresses to be verified, if no corresponding indication is carried, this verification mode is used by default; and
multi-node independent information verification, i.e., attribute information to be verified for different nodes can be independent, and partial attribute information may be different. In a case where the verification request message includes multiple addresses to be verified and multiple pieces of attribute information, the verification request message may further include indication information used for indicating, among the multiple pieces of attribute information, attribute information that needs to be verified by a node corresponding to each address to be verified. Through the indication information, which one or more pieces of attribute information need to be independently verified by the node corresponding to each address to be verified may be indicated, and for different nodes, different attribute information may be specified and verified separately.

In an exemplary embodiment, the attribute information includes at least one of: a network programming function type; Service Function (SF) information; a Segment Routing (SR) proxy type; slice information; resource information; path intent information; Virtual Private Network (VPN) service information; algorithm information; and a Multi-Topology Identifier (MT-ID).

The verification request message may be sent through a message transmitted between nodes. Such a message may be a newly defined message. Alternatively, a message that has been used currently may also be used, and the requirement of the verification request message is met through certain extension on the basis of the message that has been used currently. In the embodiments of the present disclosure, for the convenience of understanding, two implementations of the verification request message are exemplarily described. The verification request message is an Internet Control Message Protocol (ICMP)-based message, or is carried in an Internet Protocol version 6 (IPv6) packet header. However, those having ordinary skill in the art should understand that the method according to the embodiments of the present disclosure is not limited to adopt a specific manner of carrying the verification request message, and any implementation of the verification request message is applicable to the method according to the embodiments of the present disclosure.

In an exemplary embodiment, the verification request message may be an ICMP-based message. ICMP is a common connectivity detection protocol in current IPv4/IPv6/SRv6 networks. New ICMP message types, i.e., an ICMP extended Echo Request and an ICMP extended Echo Reply are defined in RFC8335, and the ICMP includes ICMP v4 and ICMP v6.

In an exemplary embodiment, the ICMP-based verification request message may include one of:
a first ICMP message, wherein an extension object in the first ICMP message is defined to carry the attribute information, that is to say, the attribute information in the verification request message may be carried in the ICMP extension object by defining the ICMP extension object, and in this case, the ICMP message can be a newly defined type of ICMP message and may also be an existing type of ICMP message; and
a second ICMP message, wherein the second ICMP message is defined to carry the attribute information, that is to say, an ICMP extension object may not be defined, and a new type of ICMP message is directly defined to specifically carry the attribute information in the verification request message.

For a more detailed implementation and application example of carrying the verification request message based on the ICMP message, please refer to the second exemplary implementation provided in the present disclosure. However, it should be noted that the second exemplary implementation is only used for providing exemplary description, and should not be construed as a limitation to the implementation of the present disclosure.

In a case where the verification request message is an ICMP-based message, after the node receives the verification request message, various ICMP-based verification procedure triggering manners may exist. In the embodiments of the present disclosure, for the convenience of understanding, four ICMP-based verification procedure triggering manners are exemplarily described. However, persons having ordinary skill in the art should understand that the method in the embodiments of the present disclosure is not limited to a specific ICMP-based verification procedure triggering manner, and any procedure triggering mechanism is applicable to the method in the embodiments of the present disclosure. In an exemplary embodiment, in a case where the verification request message is an ICMP-based message, any one of the following ICMP-based verification procedure triggering manners may be adopted.
(1) In an IPv4 or IPv6 scenario, the address to be verified serves as a destination address of the ICMP-based message. In this case, after receiving the ICMP-based message, the node identifies the destination address of the ICMP-based message. If the destination address is the local address of the node and the protocol type is ICMP, the node processes the ICMP message to identify the verification request message, and starts the verification procedure.
(2) In an SRv6 scenario, the ICMP-based message is carried in a packet as a payload, and the address to be verified serves as a last SRv6 Segment Identifier (SID) to be processed in a segment list of a Segment Routing Header (SRH) of the packet. In this case, after receiving the packet, the node identifies that the destination address of the packet is the local address of the node, and the "segment left"=0, then further reads the payload, processes the ICMP message to identify the verification request message, and starts the verification procedure.
(3) In an SRv6 scenario, the ICMP-based message is carried in a packet as a payload, the address to be verified serves as a non-last SRv6 SID to be processed in a segment list of an SRH of the packet, and the SRH carries first indication information, wherein the first indication information is used for instructing a receiving node, of which a local address is consistent with the address to be verified, to still read the payload in a case where the number of addresses which have been not processed in the segment list is not 0. In this case, after receiving the packet, the node identifies that the destination address of the packet is the local address of the node, since the SRH carries the first indication information, when segment left≠0, the node still further reads the payload, processes the ICMP message to identify the verification request message, and starts the verification procedure.
   In an exemplary embodiment, the SRH carries the first indication information in one of the following manners:
   carrying the first indication information in an extension bit of a Flag field of the SRH;
   carrying the first indication information in an SRH Type-Length-Value (TLV) of the SRH;
   carrying the first indication information in a Hop-By-Hop Options Header (HBH) option of the SRH;
   carrying the first indication information in a Destination Options Header (DOH) option of the SRH.
(4) In an SRv6 scenario, the ICMP-based message is carried in a packet as a payload, the address to be verified serves as a non-last SRv6 SID to be processed in a segment list of an SRH of the packet, and a previous address of the address to be verified carries second indication information, wherein the second indication information is used for instructing a receiving node, of which a local address is consistent with the address to be verified, to read the payload. As an exemplary implementation, the previous address of the address to be verified carries the second indication information through a network programming function. In this case, after receiving the packet, since a certain address in the segment list carries the second indication information, the node determines that it is necessary to verify an address immediately next to the address, further reads the payload, processes the ICMP message to identify the verification request message, and starts the verification procedure.

For a more detailed exemplary implementation of the triggering manner of the ICMP-based verification procedure, reference may be made to the third exemplary implementation provided in the present disclosure. However, it should be noted that the third exemplary implementation is only used for providing exemplary description, and shall not be construed as a limitation to the implementation of the present disclosure.

In another exemplary embodiment, the verification request message is carried in an IPv6 packet header.

The verification request message is carried in the IPv6 packet header in one of the following manners:
the verification request message is carried in an IPv6 Routing Header (RH) as a Type-Length-Value (TLV), wherein a value of Type in the TLV is set to be equal to a preset value used for indicating that the TLV carries the attribute information;
the verification request message is carried in a Destination Options Header (DOH), wherein a value of an Option Type in the DOH is set to be equal to a preset value used for indicating that the DOH carries the attribute information;
the verification request message is carried in a Hop-By-Hop Options Header (HBH), wherein a value of an Option Type in the HBH is set to be equal to a preset value used for indicating that the HBH carries the attribute information;
the verification request message is carried in an extension header dedicated to attribute verification.

For a more detailed implementation and application example of carrying the verification request message in the IPv6 packet header, please refer to the exemplary implementation 4 provided in the present disclosure. It should be noted that the implementation and application example are only intended to provide exemplary description, and shall not be construed as a limitation to the implementation of the present disclosure.

In a case where the verification request message is carried in an IPv6 packet header, after receiving the verification request message, the node may have multiple verification procedure triggering manners based on the IPv6 extension header. In the embodiments of the present disclosure, for the convenience of understanding, an verification procedure triggering manner based on an IPv6 extension header is exemplarily described. However, a person having ordinary skill in the art should understand that the method in the embodiments of the present disclosure is not limited to a specific verification procedure triggering manner based on an IPv6 extension header, and any procedure triggering mechanism is applicable to the method in the embodiments of the present disclosure.

An IPv6 Destination Options Header (DOH) is used for storing an option that a destination node of the packet needs to process, and may be used separately. When the DOH header and the Routing Header (RH) are carried at the same time, the DOH header and the RH may be placed at two positions. In an exemplary embodiment, in a case where the verification request message is carried in the DOH or the HBH:
(1) the DOH or the HBH that carries the verification request message is placed before the RH (also including a Segment Routing Header (SRH) of SRv6), which represents that any passing node included in the routing header processes the DOH header; or,
(2) the DOH or the HBH that carries the verification request message is placed after the RH (also including the Segment Routing Header (SRH) of SRv6), which represents that only the final destination node of the packet processes the DOH header.

When the IPv6 DOH is not used together with the RH or is placed after the RH, the node receives the verification request message, identifies that the destination address is a local address, and in a case where the RH exists, the node firstly determines, according to the RH, whether the packet has reached the final destination, i.e., whether "segment left" is equal to 0, if so, the node reads the content of the DOH header, and if the node finds that the DOH header contains verification information, the node triggers the verification procedure.

When the DOH is placed before the RH, the node receives the verification request message and identifies that the destination address is a local address, then the node firstly reads the content of the DOH header, and if is the node finds that the DOH header carries the verification information, the node triggers the verification procedure, and after the local verification procedure is completed, the node continues to perform operations such as forwarding or terminating the verification request message according to the RH after the DOH.

For a more detailed exemplary implementation of the triggering manner of the verification procedure based on an IPv6 extension header, please refer to the exemplary implementation 5 provided in the present disclosure. It should be noted that the foregoing description is merely used to provide exemplary description, and should not be construed as a limitation to the implementation of the present disclosure.

In operation S204, the attribute information is verified based on the address to be verified, and a verification result message is sent.

During implementation in an actual network, in order to enable the node that receives the verification result message to determine which verification request message corresponds to the verification result in the current verification result message, correspondence between the verification request message and the verification result message may be identified by carrying index information in both the verification request message and the verification result message. Therefore, in an exemplary embodiment, the verification request message and the verification result message carry index information, wherein the index information is used for associating the verification result message with the verification request message. In exemplary implementation, the index information carried in the verification request message and the verification result message may be identical index information, and may also be different index information having an association relationship, and the form of the specific index information is not limited in the embodiments of the present disclosure.

When realizing the method of the embodiments of the present disclosure, the node corresponding to the address to be verified needs to verify the attribute information. In an exemplary embodiment, in operation S204, the verification of the attribute information based on the address to be verified may be implemented in the following manner: in a case where it is determined that the address to be verified is a local address, verifying whether the attribute information in the verification request message matches locally stored attribute information associated with the address to be verified.

It should be understood that, when determining whether the attribute information is matched, the determination criterion may be decided according to the configuration condition of the attribute information in the node. For one kind of attribute information, one value among multiple values of the attribute may be configured in the node, or a plurality of values among the multiple values of the attribute may be configured in the node. For example, multiple capability options under the attribute may be supported, and accordingly, the determination criterion may be that the attribute information is considered to match in a case where the locally stored attribute information associated with the address to be verified is completely consistent with the attribute information in the verification request message, or the attribute information is considered to match in a case where the locally stored attribute information associated with the address to be verified includes the attribute information in the verification request message, and in this case, even if the locally stored attribute information associated with the address to be verified includes the attribute information in the verification request message and other attributes under the attribute information type, it is still considered that the attribute information is matched. Therefore, in an exemplary embodiment, verifying whether the attribute information in the verification request message matches the locally stored attribute information associated with the address to be verified may include one of:
verifying whether the attribute information in the verification request message is consistent with the locally stored attribute information associated with the address to be verified;
verifying whether the attribute information in the verification request message is a subset of the locally stored attribute information associated with the address to be verified.

The verification result in operation S204 may indicate a success or a failure, and accordingly, the verification result message may include a verification success message or a verification failure message.

In an exemplary embodiment, the verification success message carries at least one of: a success indicator and the attribute information in the verification request message, wherein the success indicator is used for indicating verification success, and the attribute information in the verification request message is carried in the verification success message, i.e. indicating that the carried attribute information is successfully verified.

In an exemplary embodiment, the verification failure message carries at least one of: a failure indicator, entire or partial failure indication information, failure cause information, and the locally stored attribute information associated with the address to be verified, wherein the failure indicator is used for indicating verification failure; the entire or partial failure indication information being carried in the verification failure message indicates verification failure of the carried attribute information; failure cause information is used for indicating the cause of verification failure; the locally stored attribute information associated with the address to be verified is carried in the verification failure message, and is used for notifying the receiving node of the verification failure message of the locally stored attribute information, and accordingly, the receiving node can perform corresponding recording and adjustment according to the attribute information.

The verification result message may be sent through a message transmitted between nodes. Such a message may be a newly defined message. Alternatively, a message that has been used currently may also be used, and the requirement of the verification result message is met through certain extension on the basis of the message that has been used currently. In the embodiments of the present disclosure, for the convenience of understanding, two implementations of the verification result message are exemplarily described. The verification result message is an ICMP-based message, or is carried in an IPv6 packet header. However, those having ordinary skill in the art should understand that the method according to the embodiments of the present disclosure is not limited to adopt a specific manner of carrying the verification result message, and any implementation of the verification result message is applicable to the method according to the embodiments of the present disclosure.

It should be noted that the implementation of the verification result message may be the same as the implementation of the verification request message, that is to say, both the verification result message and the verification request message adopt an ICMP-based message, or both the verification result message and the verification request message are carried in an IPv6 packet header. Alternatively, the implementation of the verification result message may be different from the implementation of the verification request message. For example, the verification request message may be an ICMP-based message, and the verification result message corresponding to the verification request message may be carried in an IPv6 packet header; likewise, the verification request message may be carried in an IPv6 packet header, and the verification result message corresponding to the verification request message may be an ICMP-based message.

In an example embodiment, the verification result message may be an ICMP based message. ICMP is a common connectivity detection protocol in current IPv4/IPv6/SRv6 networks. New ICMP message types, i.e., an ICMP extended Echo Request and an ICMP extended Echo Reply are defined in RFC8335, and the ICMP includes ICMP v4 and ICMP v6.

In an exemplary embodiment, the ICMP-based verification result message may include one of:
a first ICMP message, wherein an extension object in the first ICMP message is defined to carry the verification result, that is to say, the verification result in the verification result message may be carried in the ICMP extension object by defining the ICMP extension object, and in this case, the ICMP message can be a newly defined type of ICMP message and may also be an existing type of ICMP message; and
a second ICMP message, wherein the second ICMP message is defined to carry the verification result, that is to say, an ICMP extension object may not be defined, and a new type of ICMP message is directly defined to specifically carry the verification result in the verification result message.

For a more detailed implementation and application example of carrying the verification result message based on the ICMP message, please refer to the second exemplary implementation provided in the present disclosure. However, it should be noted that the second exemplary implementation is only used for providing exemplary description, and should not be construed as a limitation to the implementation of the present disclosure.

In another exemplary embodiment, the verification result message is carried in an IPv6 packet header.

The verification result message is carried in the IPv6 packet header in one of the following manners:
the verification result message is carried in an IPv6 Routing Header (RH) as a Type-Length-Value (TLV), wherein a value of Type in the TLV is set to be equal to a preset value used for indicating that the TLV carries the verification result;
the verification result message is carried in a Destination Options Header (DOH), wherein a value of an Option Type in the DOH is set to be equal to a preset value used for indicating that the DOH carries the verification result;
the verification result message is carried in a Hop-By-Hop Options Header (HBH), wherein a value of an Option Type in the HBH is set to be equal to a preset value used for indicating that the HBH carries the verification result;
the verification result message is carried in an extension header dedicated to attribute verification.

For a more detailed implementation and application example of carrying the verification result message in the IPv6 packet header, please refer to the exemplary implementation 4 provided in the present disclosure. It should be noted that the implementation and application example are only intended to provide exemplary description, and shall not be construed as a limitation to the implementation of the present disclosure.

After receiving the verification request message in operation S202, the attribute information may be verified based on the address to be verified, and the verification result message may be sent as described in operation S204. Alternatively or additionally, the node may also perform other operations according to actual situations. For example, after receiving the verification request message, the node may forward the verification request message according to an address list corresponding to the verification request message. For another example, after receiving the verification request message, the node may discard the verification request message in a case where validity verification of the verification request message fails.

An executor of the foregoing operations S202 and S204 may be a node in a network, but is not limited thereto. In the method, operations S202 and S204 are executed by a receiving node of the verification request message, in operation S202, the receiving node receives the verification request message from a sending node of the verification request message, and in operation S204, the receiving node sends the verification result message to the sending node, or sends the verification result message to a checking node for checking the verification result. It should be noted that the checking node may be the sending node, and may also be another node different from the sending node, for example, a controlling or checking node dedicated to the verification procedure in the network, or a checking node designated for the current verification procedure.

By means of the described operations, the verification request message carrying the address to be verified and the attribute information associated with the address to be verified is received, and the attribute information associated with the address to be verified is verified locally at the node, so as to verify the consistency between the control plane information and the data plane information, and solve the problem in the related art that there is no mechanism for detecting and verifying associated attributes locally at a node in a network.

Through the description of the foregoing embodiments, a person having ordinary skill in the art may clearly understand that the method according to the foregoing embodiments may be implemented by software in addition to a necessary universal hardware platform, and definitely may also be implemented by hardware. However, in many cases, the former is a preferred implementation. Based on such understanding, the essence of the technical solutions of the present disclosure or the part contributing to the related art may be embodied in the form of a software product, the computer software product is stored in a storage medium (such as a ROM/RAM, a magnetic disk, and an optical disk), and includes several instructions for instructing a terminal device (which may be a mobile phone), a computer, a server, a network device, or the like.

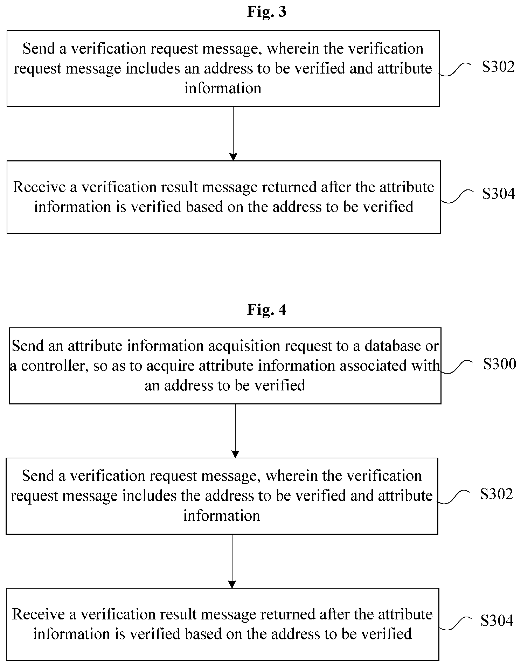

Corresponding to the foregoing information verification method, the embodiments of the present disclosure further provide an information verification method for a node running in a network. Fig. 3 is a flowchart of another information verification method according to one or more embodiments of the present disclosure. As shown in Fig. 3, the flow includes operation S302 and operation S304, which are respectively described in detail below.

In operation S302, a verification request message is sent, wherein the verification request message includes an address to be verified and attribute information.

In an exemplary embodiment, the verification request message includes one or more addresses to be verified, and types of the addresses to be verified include an Internet Protocol (IP) address and/or a Segment Routing over IPv6 dataplane (SRv6). When the verification request message includes one address to be verified, single-node verification of the attribute information may be initiated for a node corresponding to the address. In a case where the verification request message includes multiple addresses (for example, in the form of an address list), multi-node verification of the attribute information may be initiated for nodes corresponding to the multiple addresses. Regardless of single-node verification or multi-node verification, the attribute information to be verified may be one or more pieces of attribute information. In the case of multi-node verification, according to whether the attribute information to be verified for different nodes is the same, the verification may be further divided into:
multi-node identical information verification, i.e., attribute information to be verified for different nodes is the same, when there are multiple addresses to be verified, if no corresponding indication is carried, this verification mode is used by default; and
multi-node independent information verification, i.e., attribute information to be verified for different nodes can be independent, and partial attribute information may be different. In a case where the verification request message includes multiple addresses to be verified and multiple pieces of attribute information, the verification request message may further include indication information used for indicating, among the multiple pieces of attribute information, attribute information that needs to be verified by a node corresponding to each address to be verified. Through the indication information, which one or more pieces of attribute information need to be independently verified by the node corresponding to each address to be verified may be indicated, and for different nodes, different attribute information may be specified and verified separately.

In an exemplary embodiment, the attribute information includes at least one of: a network programming function type; Service Function (SF) information; a Segment Routing (SR) proxy type; slice information; resource information; path intent information; Virtual Private Network (VPN) service information; algorithm information; and a Multi-Topology Identifier (MT-ID).

The verification request message may be sent through a message transmitted between nodes. Such a message may be a newly defined message. Alternatively, a message that has been used currently may also be used, and the requirement of the verification request message is met through certain extension on the basis of the message that has been used currently. In the embodiments of the present disclosure, for the convenience of understanding, two implementations of the verification request message are exemplarily described. The verification request message is an Internet Control Message Protocol (ICMP)-based message, or is carried in an Internet Protocol version 6 (IPv6) packet header. However, those having ordinary skill in the art should understand that the method according to the embodiments of the present disclosure is not limited to adopt a specific manner of carrying the verification request message, and any implementation of the verification request message is applicable to the method according to the embodiments of the present disclosure.

In operation S304, a verification result message returned after the attribute information is verified based on the address to be verified is received.

During implementation in an actual network, in order to enable the node that receives the verification result message to determine which verification request message corresponds to the verification result in the current verification result message, correspondence between the verification request message and the verification result message may be identified by carrying index information in both the verification request message and the verification result message. Therefore, in an exemplary embodiment, the verification request message and the verification result message carry index information, wherein the index information is used for associating the verification result message with the verification request message. In exemplary implementation, the index information carried in the verification request message and the verification result message may be identical index information, and may also be different index information having an association relationship, and the form of the specific index information is not limited in the embodiments of the present disclosure.

In operation S304, since the verification result of the node performing attribute verification may indicate a success or a failure, the verification result message may include a verification success message or a verification failure message.

In an exemplary embodiment, the verification success message carries at least one of: a success indicator and the attribute information in the verification request message, wherein the success indicator is used for indicating verification success, and the attribute information in the verification request message is carried in the verification success message, i.e. indicating that the carried attribute information is successfully verified.

In an exemplary embodiment, the verification failure message carries at least one of: a failure indicator, entire or partial failure indication information, failure cause information, and the locally stored attribute information associated with the address to be verified, wherein the failure indicator is used for indicating verification failure; the entire or partial failure indication information being carried in the verification failure message indicates verification failure of the carried attribute information; failure cause information is used for indicating the cause of verification failure; the locally stored attribute information associated with the address to be verified is carried in the verification failure message, and is used for notifying the receiving node of the verification failure message of the locally stored attribute information, and accordingly, the receiving node can perform corresponding recording and adjustment according to the attribute information.

The verification result message may be sent through a message transmitted between nodes. Such a message may be a newly defined message. Alternatively, a message that has been used currently may also be used, and the requirement of the verification result message is met through certain extension on the basis of the message that has been used currently. In the embodiments of the present disclosure, for the convenience of understanding, two implementations of the verification result message are exemplarily described. The verification result message is an ICMP-based message, or is carried in an IPv6 packet header. However, those having ordinary skill in the art should understand that the method according to the embodiments of the present disclosure is not limited to adopt a specific manner of carrying the verification result message, and any implementation of the verification result message is applicable to the method according to the embodiments of the present disclosure.

It should be noted that the implementation of the verification result message may be the same as the implementation of the verification request message, that is to say, both the verification result message and the verification request message adopt an ICMP-based message, or both the verification result message and the verification request message are carried in an IPv6 packet header. Alternatively, the implementation of the verification result message may be different from the implementation of the verification request message. For example, the verification request message may be an ICMP-based message, and the verification result message corresponding to the verification request message may be carried in an IPv6 packet header; likewise, the verification request message may be carried in an IPv6 packet header, and the verification result message corresponding to the verification request message may be an ICMP-based message.

Fig. 4 is a first exemplary flowchart of another information verification method according to one or more embodiments of the present disclosure. In an exemplary embodiment, before operation S302 of sending the verification request message, the method may further include the following operation S300.

In operation S300, an attribute information acquisition request is sent to a database or a controller, so as to acquire the attribute information associated with the address to be verified.

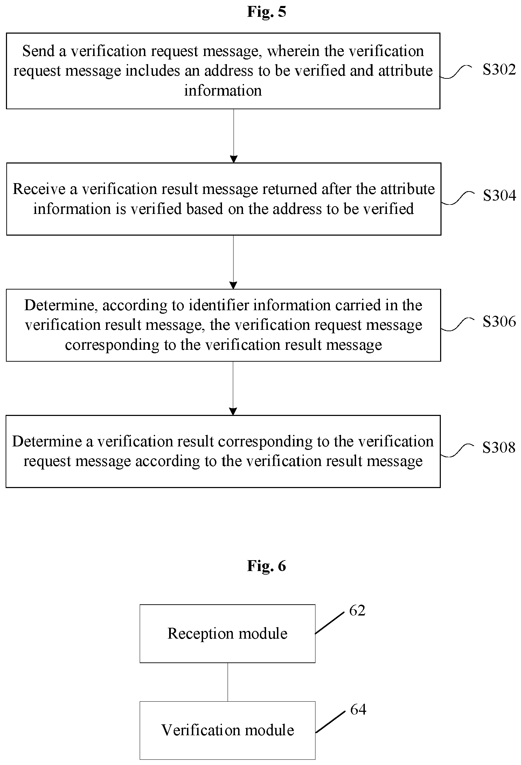

Fig. 5 is a second exemplary flowchart of another information verification method according to one or more embodiments of the present disclosure. In an exemplary embodiment, after operation S304 of receiving the verification result message returned after the attribute information is verified based on the address to be verified, the method may further include the following operation S306.

In operation S306, the verification request message corresponding to the verification result message is determined according to the index information carried in the verification result message.

In operation S308, a verification result corresponding to the verification request message is determined according to the verification result message.

An executor of the foregoing operations S302 and S304 may be a node in a network, but is not limited thereto. In the method, operations S302 and S304 are executed by a sending node of the verification request message. In operation S302, the sending node sends the verification request message to the node that is to execute the verification, and in operation S304, the sending node receives the verification result message from the node executing the verification. Alternatively, the operations S302 and S304 are respectively executed by the sending node of the verification request message and a checking node of the verification request message. It should be noted that the checking node may be the sending node, and may also be another node different from the sending node, for example, a controlling or checking node dedicated to the verification procedure in the network, or a checking node designated for the current verification procedure.

It should be noted that, the current information verification method corresponds to the information verification method described above. For specific explanation and definition of the same feature, please refer to the embodiments of the information verification method described above, which is not repeated herein.

By means of the described operations, the address to be verified and the attribute information associated with the address to be verified are carried in the verification request message, so that the receiving node can verify the attribute information associated with the address to be verified, thereby verifying the consistency between the control plane information and the data plane information, and solving the problem in the related art that there is no mechanism for detecting and verifying associated attributes locally at a node in a network.

Through the description of the foregoing embodiments, a person having ordinary skill in the art may clearly understand that the method according to the foregoing embodiments may be implemented by software in addition to a necessary universal hardware platform, and definitely may also be implemented by hardware. However, in many cases, the former is a preferred implementation. Based on such understanding, the essence of the technical solutions of the present disclosure or the part contributing to the related art may be embodied in the form of a software product, the computer software product is stored in a storage medium (such as a ROM/RAM, a magnetic disk, and an optical disk), and includes several instructions for instructing a terminal device (which may be a mobile phone), a computer, a server, a network device, or the like.

An information verification device is also provided in the embodiments of the present disclosure. The device is used for implementing the described embodiment and exemplary implementation, and what has been described will not be elaborated. The term "module", as used hereinafter, is a combination of software and/or hardware capable of realizing a predetermined function. Although the device described in the following embodiment is preferably implemented by software, implementation of hardware or a combination of software and hardware is also possible and conceived.

Fig. 6 is a structural block diagram of an information verification device according to one or more embodiments of the present disclosure. As shown in Fig. 6, the device includes:
a reception module 62, configured to receive a verification request message, wherein the verification request message includes an address to be verified and attribute information; and
a verification module 64, configured to verify the attribute information based on the address to be verified, and send a verification result message.

Specific examples in the embodiments of the present disclosure may refer to the examples of the methods described in the above embodiments and exemplary embodiments, and will not be elaborated in the embodiments of the present disclosure.

It should be noted that each module may be implemented by software or hardware. The latter may be implemented in the following manner, but is not limited thereto. All the modules are located in a same processor; alternatively, the modules are located in different processors in an arbitrary combination.

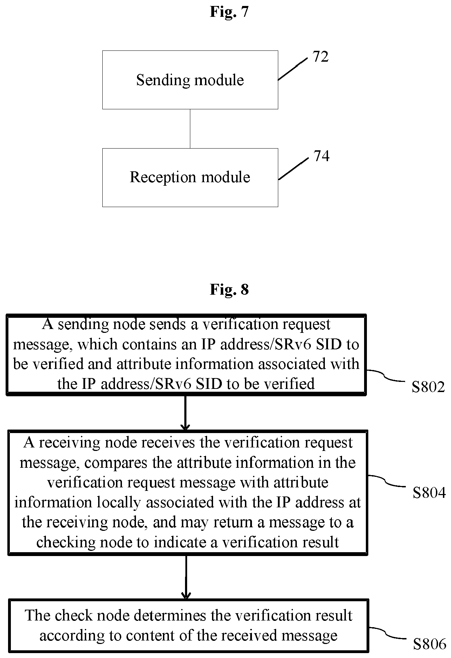

Fig. 7 is a structural block diagram of another information verification device according to one or more embodiments of the present disclosure. As shown in Fig. 7, the device includes:
a sending module 72, configured to send a verification request message, wherein the verification request message includes an address to be verified and attribute information; and
a reception module 74, configured to receive a verification result message returned after the attribute information is verified based on the address to be verified.

Specific examples in the embodiments of the present disclosure may refer to the examples of the methods described in the above embodiments and exemplary embodiments, and will not be elaborated in the embodiments of the present disclosure.

It should be noted that each module may be implemented by software or hardware. The latter may be implemented in the following manner, but is not limited thereto. All the modules are located in a same processor; alternatively, the modules are located in different processors in an arbitrary combination.

The embodiments of the present disclosure also provide a computer-readable storage medium. The computer-readable storage medium stores a computer program, wherein the computer program, when executed by a processor, causes the processor to implement the operations in any one of the described method embodiments.

In an exemplary embodiment, the computer-readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present disclosure further provide an electronic device, including a memory and a processor. The memory stores a computer program. The processor, when executing the computer program, implements the operations in any one of the method embodiments.

In an exemplary embodiment, the electronic device may further include a transmission device and an input/output device, wherein the transmission device is connected to the processor, and the input/output device is connected to the processor.

Specific examples in the embodiments of the present disclosure may refer to the examples described in the above embodiments and exemplary embodiments, and the embodiments of the present disclosure will not be repeated herein.

The information verification scheme provided by the described embodiments is described in detail below through exemplary embodiments.

### First exemplary implementation

In the first exemplary implementation, an overall procedure of information verification is described. Fig. 8 is a flowchart of an information verification method according to a first exemplary implementation. As shown in Fig. 8, the information verification method is used in an IP or SRv6 network. The method includes the following operations S802 to S806.

In operation S802, a sending node sends a verification request message, which includes an IP address/SRv6 SID to be verified and attribute information of the IP address/SRv6 SID to be verified.

If the sending node does not locally have the attribute information associated with the IP address/SRv6 SID to be verified, before the sending node sends the verification request message, operation S800 may further be performed. In operation S800, the attribute information associated with the IP address/SRv6 SID to be verified is obtained, where the obtaining manner includes sending an acquisition request to a centralized database or controller.

In operation S804, a receiving node receives the verification request message, verifies the IP address/SRv6 SID and the attribute information associated with the IP address/SRv6 SID. For example, the attribute information in the verification request message may be compared with locally stored attribute information associated with the IP address/SRv6 SID of the node, and a corresponding action is performed according to a comparison result. Some possible results are elaborated as follows. No information may be returned for reasons such as an internal error or a processing timeout. If the verification is passed, verification success information is returned, wherein the verification success information may carry attribute information for which the verification is passed. If the verification fails, verification failure information is returned, wherein the verification failure information may carry attribute information for which the verification fails. A packet carrying the verification request message may be forwarded. The packet carrying the verification request message may be discarded.

It should be noted that, after the verification request message sent by the sending node is transmitted in the network, when the verification request message arrives at the receiving node, the verification request message may not be completely consistent with the sent packet.

In operation S806, the checking node determines the verification result according to the received reply message. Some possible results are elaborated below. If no message is received within a preset time range, the verification may be considered to be overtime. The verification may be considered successful. The verification may be considered failed. The verification may be considered partially failed. Generally, the checking node and the sending node may be the same node, but a case that the checking node and the sending node are not the same node is also supported, which is not limited in the embodiments of the present disclosure.

The foregoing message may be a message extended based on the ICMP (for details, reference may be made to the second and third exemplary implementations), and may also be carried in an IPv6 extension header (for details, reference may be made to the fourth and fifth exemplary implementations).

The information verification method has at least the following two verification modes:
Single-node verification triggered by a single verification request message, i.e. sending one verification request message to verify information of only one node, and if information verification is to be performed on other nodes, other verification request messages need to be sent;
Multi-node verification triggered by a single verification request message, i.e. sending one verification request message to verify information of multiple nodes on a path, and the verification request message is transmitted among various nodes.

In the multi-node verification triggered by a single verification request message, according to whether the information to be verified is the same, the verification can be further divided into the following two verification sub-modes:
(1) Multi-node identical information verification triggered by a single verification request message, wherein the information to be verified is the same among the multiple nodes. For example, slice identities corresponding to multiple nodes within a single slice are expected to be the same, the sent verification request message only contains one piece of slice identifier information to be verified, and each node uses the slice identifier information to perform comparison verification with local information;
(2) Multi-node independent information verification triggered by a single verification request message, i.e. information required to be verified by respective nodes is not shared among the multiple nodes, and is independent from each other. In this case, the verification request message carries information to be verified by the respective nodes. The verification information may carry appointed numbers, indicators, or a specified information processing sequence, so that after receiving the verification request message, the node can find its corresponding part of the verification request message.

For the mode of multi-node verification triggered by a single verification request message, after S804, operation S804 may further be included. In operation S804, the node continues to forward the verification request message.

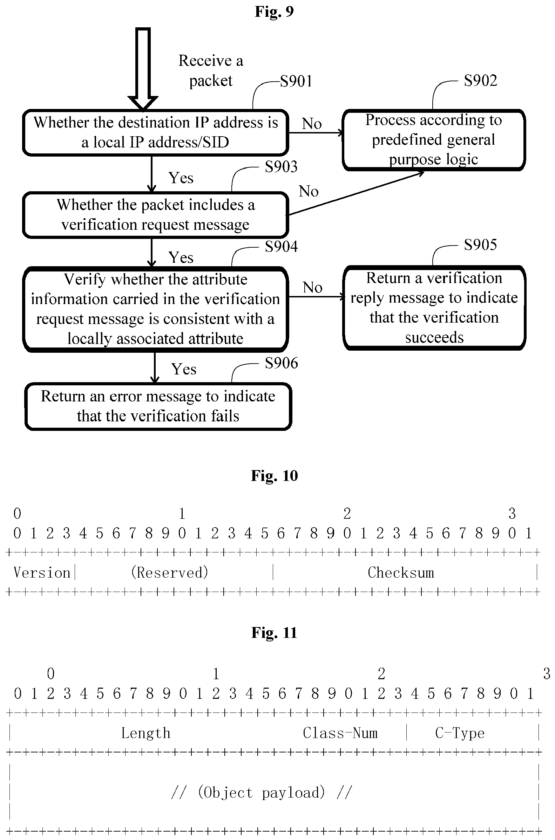

Fig. 9 is an exemplary processing flowchart after a receiving node receives a verification request message according to the first exemplary implementation. As shown in Fig. 9, after the receiving node receives the verification request message, the following operations S901 to S906 are included.

In operation S901, after receiving the packet, the node firstly determines whether a destination IP address of the packet is a local address; if not, operation S902 is performed; if so, operation S903 is performed.

In operation S902, the packet is processed according to a predefined logic, wherein possible actions include looking up in a routing table for forwarding, and if the IP is unreachable, the packet may be discarded and information indicating that the IP is unreachable may be returned.

In operation S903, if the destination IP address is the local address, before entering the verification procedure, optionally, the packet may further be checked according to a predefined processing logic, for example, whether the format of the packet and the parameters are correct may be checked, and then the verification procedure is performed after the checking is passed.

In operation S904, during the verification procedure, the node needs to verify whether the attribute information carried in the verification request message is consistent with the corresponding attribute associated with the IP and contained in the local table entry of the node. A possible situation is that the IP is associated with multiple attributes locally at the node, and the verification request message carries a part of the attributes among the multiple attributes, then during the verification, if the attributes in the verification request message are a subset of the local attributes of the node, it can be considered that the verification is passed. After the verification is completed, corresponding processing is selected according to the verification result, and when the verification is passed, operation S905 is executed, otherwise, operation S906 is executed.

In operation S905, an error message is returned to indicate that the verification fails.

In operation S906, a verification reply message is returned to indicate that the verification succeeds.

### Second exemplary implementation

In the second exemplary implementation, an implementation of various messages involved in the information verification method based on the ICMP-based messages is described. ICMP is a common connectivity detection protocol in current IPv4/IPv6/SRv6 networks. New ICMP message types, i.e., an ICMP extended Echo Request and an ICMP extended Echo Reply are defined in RFC8335. In order to avoid confusion, the ICMP packets/messages defined in the existing standards in the exemplary embodiments are collectively referred to as existing ICMP packets/messages. The extended ICMP packets/messages in the exemplary embodiments all refer to the newly extended ICMP packets/messages. If not specified, the ICMP includes ICMPv4 and ICMPv6.

### Verification request message

Fig. 10 is a schematic diagram of an extension header of an extended ICMP message according to a second exemplary implementation. Fig. 11 is a schematic diagram of an extension object of an extended ICMP message according to a second exemplary implementation.

RFC4484 defines an ICMP Extension Structure, which is used for carrying additional information in the ICMP message. The extension structure is composed of an ICMP Extension Header (as shown in Fig. 10) and an ICMP Extension Object (as shown in Fig. 11).

In the ICMP extension object, a Class-Num field represents the type of the extension object, a C-Type field represents a specific sub-type in the extension object, and an Object payload carries specific data.

The present exemplary implementation proposes carrying the attribute information to be verified in an ICMP verification request message. In order to carry the attribute information in the verification request message, the present exemplary implementation newly defines an ICMP extension object, and applies for a new Class-Num value (such as TBA1), which represents that the extension object carries the attribute information associated with a local IP to be verified.

The sub-type of the specific attribute information and the data carried in the Object payload are defined by the value of C-Type, for example:
C-Type=1 indicates carrying SRv6 network programming function type code;
C-Type=2 indicates carrying network slice ID;
C-Type=3 indicates carrying Service Function information;
C-Type=4 indicates carrying Color information;
C-Type=5 indicates carrying traffic class information;
C-Type = 6 indicates carrying algorithm information;
C-Type=7 indicates carrying Multi-Topology ID (MT-ID) information;
C-Type=8 indicates carrying VPN information. This C-Type is only used for representing that the attribute information to be verified may include VPN-related information. In practical use, because different VPNs, such as an L2 VPN, an L3 VPN, and an EVPN, have multiple different attribute information, a detailed object to be verified and a format of the object to be verified need to be defined for the attribute information advertised in the control plane for a specific VPN service, and one format cannot cover all scenarios of all VPNs.

The above is only an example for description, and the attribute information that needs to be verified and is associated with the IP address/SRv6 SID may be defined by using a similar method.

Besides carrying the numerical value/type value corresponding to the corresponding attribute, the Object payload may further refine and indicate the attribute.

For example, in a network slice scenario, multiple types of network slice identities may exist.

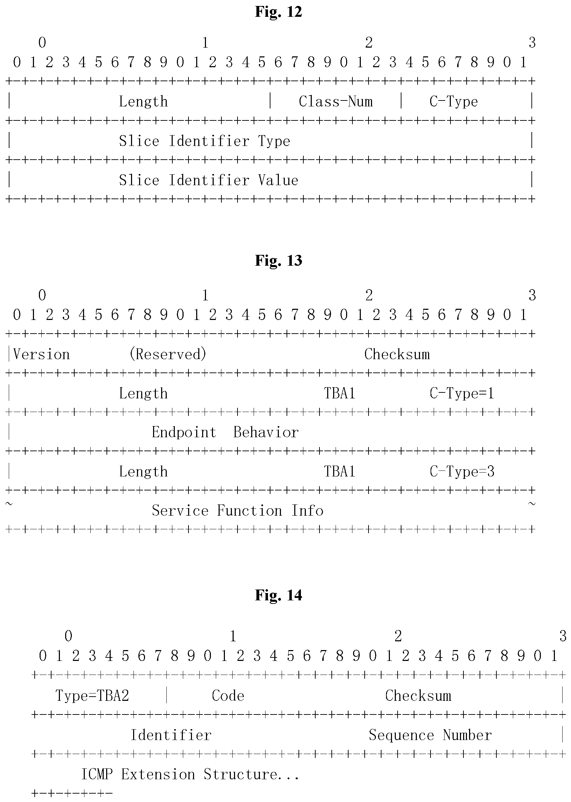

Fig. 12 is a schematic diagram of an ICMP extension object corresponding to a slice identifier according to a second exemplary implementation. As shown in Fig. 12, a corresponding extension object is defined to carry the slice identifier type and slice identifier numerical information in an Object payload.

The Slice Identifier Type specifies the slice ID type, for example:
Slice Identifier Type=1 represents that the slice identifier type is a VTN ID defined in draft-dong-6man-enhanced-vpn-vtn-id;
Slice Identifier Type=2 represents that the slice identifier type is an All defined in draft-peng-teas-network-sampling;

The slice Identifier Type=3 represents that the slice identifier type is a Slice Selector defined in draft-best bar-teas-ns-packet.

The Slice Identifier Value field carries a specific slice ID value.

Different types of identifiers may be used to identify a network slice, and an Object payload may carry slice identifier types and slice identifier numerical information, as shown in Fig. 12.

For example, in addition to a service function type, service function information may further carry other information of the service function, for example, the self-defined information advertised together with the SID and defined in draft-dawra-idr-bgp-ls-sr-service-segments-05.

Fig. 13 is a schematic diagram of an ICMP extension structure carrying multiple pieces of attribute information according to a second exemplary implementation. In a case where one verification request message carries multiple pieces of attribute information required to be verified, multiple ICMP extension objects of corresponding types may be carried. The extension structure is shown in Fig. 13.

The above newly defined ICMP extension object needs to be carried in the verification request message. The verification request message may be a newly extended ICMP message. Fig. 14 is a schematic diagram of an extended ICMPv4/ICMPv6 message according to a second exemplary implementation. Fig. 14 shows an exemplary format of the extended ICMP message. A header format is similar to that in an ICMP ECHP REQUEST message, and a new type value TBA2 is applied.

Another possible manner for carrying the newly defined ICMP extension object is to directly carry the newly defined ICMP extension object in an ICMP request message in the related art.

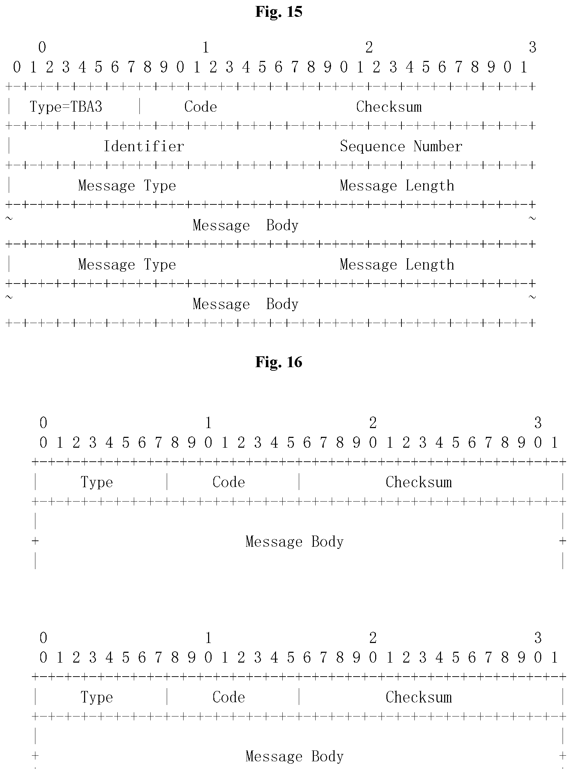

A third possible manner is to directly define a new type of ICMP message and structure without defining an ICMP extension object according to a manner in the related art, and directly carry the attribute information in the ICMP message. Fig. 15 is a schematic diagram of an ICMP message directly carrying verification information according to a second exemplary implementation.

### Returning Verification Failure Result

After the verification, the receiving node needs to return a verification result. If the verification fails, an error message needs to be returned.

The verification error message is a new type of extended ICMP message.

Fig. 16 is a schematic diagram of a generic ICMP message structure according to a second exemplary implementation, with the structure of the extended message following the generic structure of ICMP messages, as shown in Fig. 16.

The verification error message may include the following forms:
1) In a simplest case, a specific return code (code) value is not defined (generally, the code field is set to 0 in this case), and a new Type value is directly defined, wherein the Type represents that the message is a verification failure message of the local attribute, indicating that the verification fails.
2) In addition to the newly defined Type value, the verification failure situation is further indicated by defining the code value, for example:
   Code=1 represents that the verification of all attributes fails, for example, the detection packet contains two pieces of attribute information, and after the node verifies the two pieces of attribute information, it is found that both of the two pieces of attribute information are inconsistent with information locally stored on the node, and this case is that the verification of all attributes fails;
   Code=2 represents that the verification of partial attributes fails, for example, the detection packet contains two pieces of attribute information, and after verification, it is found that one piece of attribute information is inconsistent with information locally stored on the node, and the other piece of attribute information is consistent with information locally stored on the node, and this case is that the verification of partial attributes fails.

Further, locally stored attribute information may be provided in a Message Body, and may be carried by using an extension object similar to that in the verification request message, for example, similar to the carrying manner shown in Fig. 11. Alternatively, the locally stored attribute information may be carried in a newly defined message body format, for example, similar to the verification request message format defined in Fig. 15.

### Returning Verification Success Message

If the verification succeeds, a message needs to be returned to indicate that the verification succeeds.

The verification success message may be in the following forms.

An ICMP Echo Reply message in the related art is directly used, and a Message Body contains data carried in a Message Body in the verification request message.

A new type of ICMP reply message is defined, and a new Type value is adopted. According to the generic ICMP message structure shown in Fig. 16, a Message Body includes data carried in a Message Body in the verification request message.

Third exemplary implementation

The triggering manner of the ICMP-based verification procedure is described according to different scenarios (pure IPv4/IPv6 scenario, SRv6 scenario) as follows.

In a pure IPv4/IPv6 scenario, if the verification request message is carried by an extended ICMP message, a triggering manner of the verification procedure is similar to an ICMP request process in the related art. After receiving a packet, the node identifies that the destination IP address is the local address and the protocol type is ICMP, and then enters the processing procedure of ICMP messages. According to different carrying manners of the verification request message, the verification request message is identified according to the Type field in the header of the ICMP message or by further identifying the type of the extension object, and the verification procedure is triggered. If the node fails to identify the packet, the node may discard the packet, report an error, etc.

SRv6 scenario triggering manner 1: In the SRv6 scenario, the ICMP message is carried in the packet as payload. Since it is specified in SRv6 that only when the entire segment list carried in the SRH has been processed, that is to say, only when "segment left"=0, the information in payload is further acquired and processed; therefore, in a case of not extending the SRv6 mechanism in the related art, the SID to be verified needs to be arranged in the segment list as the last SID to be processed (namely, the last SRv6 SID to be processed). According to the regulation in the current standard, the SID is stored in the SRv6 segment list in a reverse order, that is, the first SID to be processed is actually placed at the last position in the segment list, hence, the last SID to be processed is actually placed in the first position of the segment list. Those having ordinary skill in the art should understand that, in a case where the arrangement mode of the SIDs in the segment list is changed, the position of the last SID to be processed in the segment list is also changed accordingly, which is not limited in the embodiments of the present disclosure. After receiving the packet, the node to be verified identifies that the destination address is the local SID and "segment left"=0, then the node further identifies that the packet is an ICMP message according to the Next Header in the SFH header, and performs subsequent processing consistent with the foregoing pure IPv4/IPv6 scenario. Another possible implementation is to directly send an IPv6 packet without carrying an SFH extension header when sending the packet, wherein the destination address is set to the SID to be verified, and in this case, the triggering manner of the verification procedure is consistent with the foregoing pure IPv4/IPv6 scenario.

SRv6 scenario triggering manner 2: The above-mentioned manner 1 has a limitation that the SID to be verified has to be the last SID to be processed in the segment list, that is, no matter whether the SID is the last node of a path in an actual service scenario, the SID to be verified has to be placed at the last position in the sent verification message.

If the SID to be verified is an intermediate node of the path, indication information needs to be added to the packet to indicate that the node needs to attend to the payload content carried in the packet even when the "segment left" is not 0, and it is also needed to satisfy the precondition that the destination address is the local SID.

The indication information may be carried in the following manners:
1) In a "Flags" field in the SRH, a bit is extended to specially indicate that the node needs to attend to the content in the payload of the packet
2) A new SRH TLV is defined to carry the indication information
3) A new HBH/DOH option is defined to carry the indication information
4) A new network programming function, such as END.I, is defined. The specific function content of the new network programming function is verifying the SID immediately following the END.I SID, and searching the payload of the packet for relevant verification information.

In addition, similar to the Ping procedure in the related art, in order to prevent the packet from being intercepted before reaching the destination node, the TTL field in the IP packet needs to be set to a large value, such as 255.

Fourth exemplary implementation

In the fourth exemplary implementation, the implementation of various messages involved in the information verification method based on an IPv6 extension header is described.

It should be noted that, in addition to being implemented by an ICMP-based message, the verification request message may also be carried in another manner. For example, in an IPv6/SRv6 scenario, the attribute information to be verified may be carried in an IPv6 extension header, for example, the attribute information to be verified may be carried in an IPv6 routing header, a Destination Options Header (DOH), or a Hop-By-Hop Options Header (HBH). Alternatively, a new type of extension header may also be defined to be specially used for carrying the verification request message to be verified.

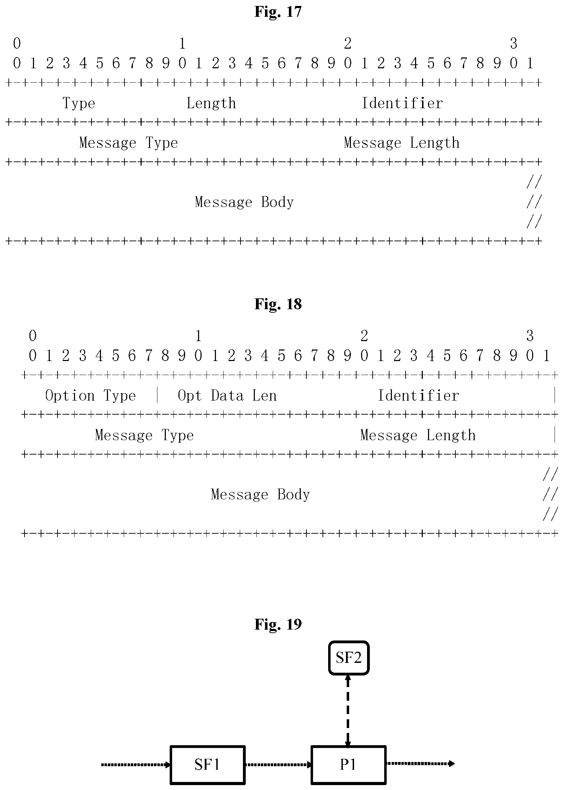

Fig. 17 is a schematic diagram of an extended IPv6 routing header TLV according to a fourth exemplary implementation, in which the verification request message is carried in a routing header as a TLV.

A new Type value corresponds to the TLV, and the TLV needs to contain index information so as to match the verification request message and the verification result message, The data part of the TLV needs to contain at least a data type to be verified and specific content information of the data.

Fig. 18 is a schematic diagram of an extended hop-by-hop option and destination option according to a fourth exemplary implementation, in which the verification request message serves as a hop-by-hop option or destination option.

A new Option Type value corresponds to the Option, and the Option needs to include index information so as to match the verification request message and the verification result message. The data part at least needs to include a data type to be verified and specific content information of the data.

When the verification node returns the verification result, the verification result may be carried in a corresponding IPv6 extension header in a manner similar to that of the verification request message. The verification result may be carried through a newly defined TLV or Option, and index information needs to be included so as to match the verification request message and the verification result message. The verification result may also be returned through an ICMP message in the manner described in the third exemplary implementation.

It should be noted that no matter which manner is used, it needs to be ensured that the verification request message and the verification reply message can correspond to each other, for example, an identification field which is the same as that of the verification reply message can be carried in the verification reply message, so that the receiving node can perform association and obtain a correct verification result.

Fifth exemplary implementation

The triggering manner of the verification procedure based on the IPv6 extension header is described as follows.

In the exemplary embodiment, the triggering manner of the verification request message when the verification information is carried in the IPv6 extension header is described as follows by taking the case where the verification information is carried in the DOH as an example.

According to the regulations in the RFC8200, an IPv6 Destination Options Header (DOH) is used for storing an option that a destination node of the packet needs to process, and may be used separately. When the DOH header and the RH are carried at the same time, the DOH header and the RH may be placed at two positions.

The DOH header being placed after the RH represents that only the final destination of the packet will process the DOH header.

The DOH header being placed before the RH represents that all the passing nodes included in the RH will process the DOH header.

Segment Routing Header (SRH) of SRv6 is one type of routing header, and the processing principles are the same.

When an IPv6 DOH is not used together with an RH or is placed after the RH, a node receives the verification request message, identifies that a destination IP is a local IP, and in a case where the RH exists, firstly determines, according to the RH, whether a final destination of the packet has been reached, i.e. whether "segment left" is 0, and if so, the node reads the content of the DOH header, and if it is found that verification information is carried in the DOH header, the verification procedure is triggered.

When the DOH is placed before the RH, the node receives the verification request message, identifies that the destination IP is the local IP, then firstly reads the content of the DOH header, and if it is found that the verification information is carried in the DOH header, the verification procedure is triggered, and after the local verification procedure is completed, the node continues to perform operations such as forwarding or terminating the verification request message according to the RH after the DOH.

### Sixth exemplary implementation

The sixth exemplary implementation of the present disclosure describes verification of SRv6 SID information in a service chain scenario (taking single-node verification triggered by one ICMP message as an example).

Fig. 19 is a schematic diagram of a service chain scenario according to a sixth exemplary implementation, and as shown in Fig. 19, two service functions SF1 and SF2 exist on the service chain. The SF1 is a firewall (FW), the SF1 supports SRv6, and the corresponding SID is SID1. In this case, the information associated with SID1 is the service function FW (assuming that the corresponding type code is FW when the information is advertised by the control plane).

SF2 is a Load Balancer (LB), but does not support an SRv6 function. P1 serves as a proxy of SF2, and a corresponding SID is STA2. In addition, the SID2 further has a network programming function, such as a static proxy END.AS function defined in draft-ietf-spacing-sr-service-programming, and it is assumed that a corresponding function code is TBA1-2. Therefore, the SID2 is associated with two pieces of information, a service function LB (assuming that when the SID2 is advertised in a control plane, a corresponding type code is LB) and a network programming function END.AS.

It is assumed that the information associated with the SID2 needs to be verified. For the verification request message sent from the sending node to P1, it is needed to ensure that when the packet arrives at P1, the destination address is SID2. The sending node can directly set the destination address as SID2 when sending the verification request message, or carry an SID LIST (such as <SA,DA=SID1>SRH<SID2;SL=1>payload) when sending the verification request message.

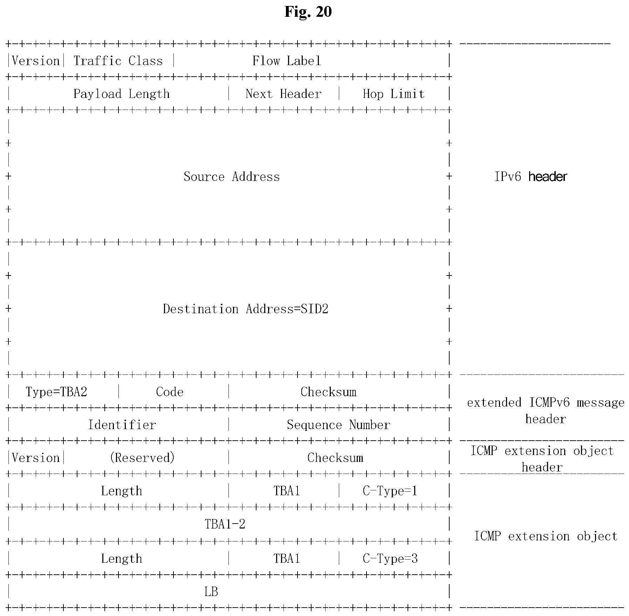

It is assumed that the ICMP message carries a verification request message. Fig. 20 is a schematic diagram of a complete verification request message according to a sixth exemplary implementation, which gives an example of an integrity message received by P1, and this example is the simplest case in which no SRH header is carried.

After receiving the packet, P1 finds that the destination address SID2 in the packet is the local IP, reads a Next Header of the IPv6 header, finds that payload is an extended ICMPv6 verification request message, and then enters a verification procedure. P1 compares the network programming type code and service function type code carried in the extension object with the locally stored network programming type and service function type associated with the SID2.

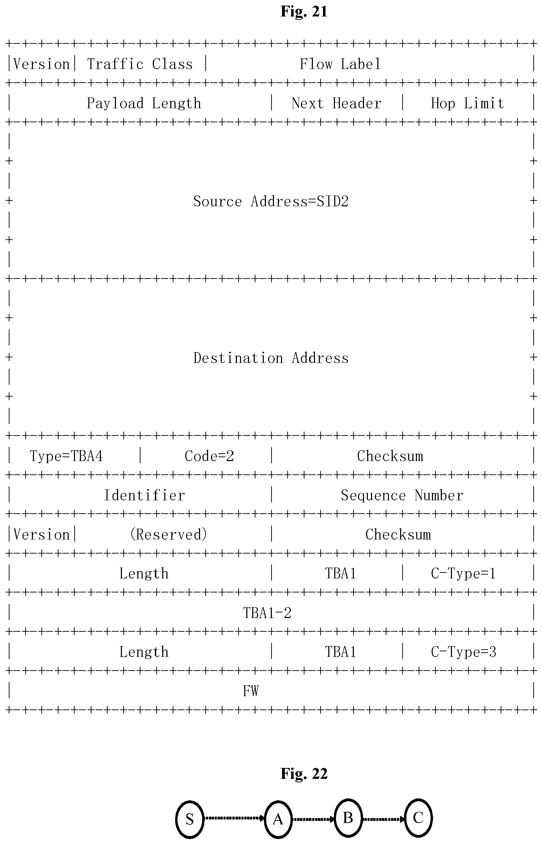

If the verification fails, for example, the network programming type associated with the SID2 passes the verification, but the local service function associated with the SID2 is not the LB but the FW, a message needs to be returned to indicate that the verification fails. Fig. 21 is a schematic diagram of a complete error message according to a sixth exemplary implementation, which provides an example of a possible reply message.

The packet with Type=TBA4 is an extended ICMP verification error message, indicating that the verification fails, and the packet with code=2 indicates that the verification partially fails. Further, related attribute information that is actually associated with the SID2 in the P1 is carried in the extension object.

After receiving the verification error message, the receiving node, similar to the ICMP procedure in the related art, determines the verification request message corresponding to the verification error message according to Identifier and Sequence Number, and acquires a verification result.

### Seventh exemplary implementation

The seventh exemplary implementation describes the verification process of an algorithm associated with SID (taking multi-node identical information verification triggered by a single verification request message based on DOH as an example).

Fig. 22 is a schematic diagram of a flexible algorithm path according to one or more embodiments of the present disclosure. As shown in Fig. 22, A-B-C is a path calculated based on a flexible algorithm, corresponding SRv6 SIDs are SIDA/SIDB/SIDC, and the corresponding algorithm IDs are 129.

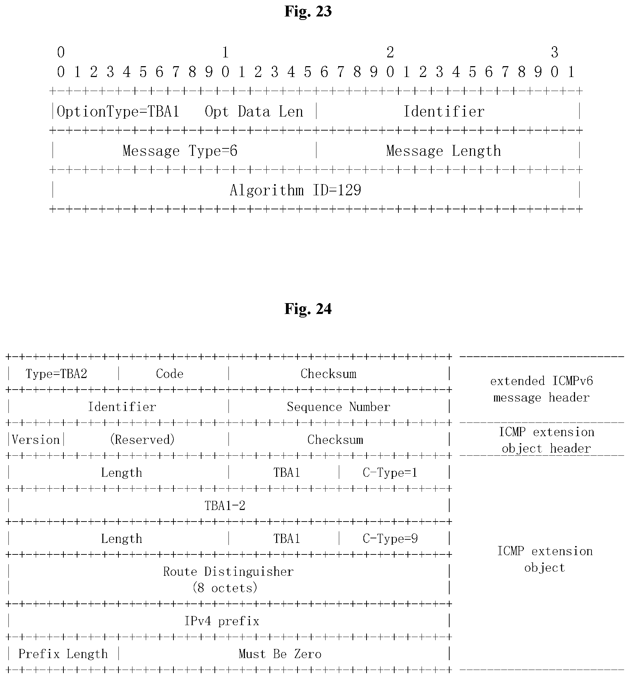

In order to verify the mapping relationship between each SID on the path and the algorithm, Fig. 23 is a schematic diagram of carrying algorithm information in a DOH according to a seventh exemplary implementation, which gives an example of carrying the algorithm information in a DOH.
Option Type = TBA1 represents that the option carries verification information,
Message Type=6 indicates that the object to be verified is algorithm information, and the Algorithm ID field carries the specific algorithm ID information.

In the verification request message sent by the node S, the source address is S, the destination address is SIDA, the DOH is placed before the SRH, and the packet structure is:
<SA=S, DA=SIDA>; DOH; SRH < SIDA, SIDB, SIDC; SL = 2>

After the packet arrives at the node A, the node A identifies that the destination address is the local SID, continues to process the DOH, identifies that verification information is contained in the DOH, and triggers a verification procedure. The node A searches, in a local forwarding table entry, for an algorithm ID corresponding to the SIDA, and compares the found algorithm ID with the algorithm ID carried in the DOH, and returns, according to a verification situation, a verification success or error message to the node S. The node A continues to process the SRH message, subtracts 1 from SL, and modifies DA into SIDB and continues to forward the packet. The packet sent by the node A is:
<SA=S, DA=SIDB>; DOH; SRH < SIDA, SIDB, SIDC; SL = 1>

The processing procedure after the packet reaches the node B is similar to that of the node A. The node B identifies that the destination address is a local SID, continues to process the DOH, identifies that verification information is contained in the DOH, triggers a verification procedure, searches, in a local forwarding table entry, for an algorithm ID corresponding to the SIDB and compares the found algorithm ID with the algorithm ID carried in the DOH, and returns a verification success or error message to the node S according to a verification situation. The node B continues to process the SRH message, subtracts 1 from SL, and modifies the DA into SIDC and continues to forward the packet. The packet sent by the node B is:
<SA=S, DA=SIDC>; DOH; SRH < SIDA, SIDB, SIDC; SL = 0>

After the packet reaches the node C, similarly, a verification procedure is triggered according to the DOH, and when the SRH is processed, it is found that SL=0, which represents that the node C is the last node on the path, and the packet will not be forwarded any more, and the process ends.

Similar to the ICMP procedure, when the node S sends a verification message, a timeout period may be set, and if no reply packet is received within the specified period of time, it is considered that the verification fails due to timeout. For example, if only messages returned by the nodes A and B are received within a specified period of time, it is considered that the verification at the node C fails due to timeout.

### Eighth exemplary implementation

The eighth exemplary implementation describes an application example in an SRv6 VPN scenario.

In RFC4365, IPv4 and IPv6 VPN are defined. In an SRv6 VPN scenario, an SRv6 Service SID on a PE is associated with a local private IPv4/IPv6 prefix and an RD of a node, and these pieces of information are advertised through BGP, and meanwhile, a network programming function corresponding to the SRv6 Service SID is also advertised.

Fig. 24 is a schematic diagram of SRv6 IPv4 verification information according to an eighth exemplary implementation, which presents an extended message taking a message being carried in ICMP as an example.

Type=1 indicates that the attribute information to be verified is the network programming function. C-Type=9 is predefined to indicate that the information to be verified is an extension object of the IPv4 VPN, which carries RD, IPv4 prefix and length information thereof. Similarly, if the scenario is an SRv6 IPv6 VPN scenario, a new type of extension object needs to be defined, and carries RD, IPv6 prefix, and length information thereof.

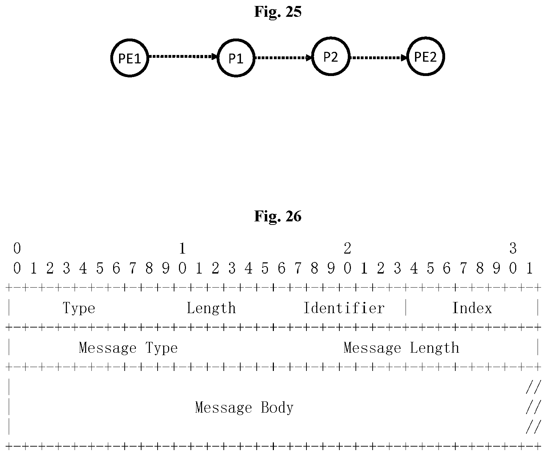

Fig. 25 is a schematic diagram of SRv6 IPv4 VPN networking according to an eighth exemplary implementation. As shown in Fig. 25, the verification request message may be sent from PE1 to PE2, and an intermediate P node forwards the verification request message according to a normal process without triggering the verification procedure.

Certainly, the manner of verifying multiple pieces of attribute information based on one verification request message may not be adopted, and for different pieces of attribute information, multiple verification request messages may be sent respectively for the multiple pieces of attribute information, which may also achieve a similar verification purpose.

### Ninth exemplary implementation

The ninth exemplary implementation describes an application example of multi-node independent information verification triggered by a single verification request message.

In this scenario, it is required that the verification request message carries information to be verified by each node, and at the same time, it is also required that each node can find a corresponding verification message.

Fig. 26 is a schematic diagram of a TLV format carrying verification information according to a ninth exemplary implementation.

As shown in Fig. 26, the index information is added to the TLV that carries the verification information, and the index value is consistent with the "segment left" value of the node. The TLV is carried in the IPv6 routing header. When the verification request message carries the information to be verified of multiple nodes, multiple TLVs are carried, which respectively correspond to the verification information of the respective nodes.

After receiving the verification request message, the node enters the verification procedure, searches for a TLV with an equal index value according to the "segment left" information in the current routing header, and reads the information to be verified corresponding to the node from the TLV.

The foregoing first exemplary implementation describes an information verification solution as a whole. Implementation details of the solutions of the first exemplary implementation are respectively described in detail in the second to ninth exemplary implementations. A person having ordinary skill in the art should understand that the first to ninth exemplary implementations can be combined in any manner to form more exemplary implementations.

According to the information verification solution in the embodiments of the present disclosure, an SID/IP address and attribute information associated with the SID/IP are carried in a verification request message, so that a node can locally verify the attribute information associated with the SID/IP, thereby verifying the consistency between control plane information and data plane information, and solving the problem in the related art that there is no mechanism for detecting and verifying associated attributes locally at a node in a network.

Obviously, those having ordinary skill in the art should understand that each module or each operation of the present disclosure can be implemented by a universal computing device, they may be centralized on a single computing device or distributed on a network composed of multiple computing devices, they can be implemented by program codes executable by a computing device, and thus can be stored in a storage device and executed by the computing device, furthermore, in some cases, the shown or described operations may be executed in an order different from that described here, or they are made into integrated circuit modules respectively, or multiple modules or operations therein are made into a single integrated circuit module for implementation. As such, the present disclosure is not limited to any particular hardware and software combination.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall belong to the scope of protection of the present disclosure.

## Claims

1. An information verification method, comprising:
receiving a verification request message, wherein the verification request message comprises an address to be verified and attribute information; and
verifying the attribute information based on the address to be verified, and sending a verification result message.

2. The method according to claim 1, wherein verifying the attribute information based on the address to be verified comprises:
in a case where it is determined that the address to be verified is a local address, verifying whether the attribute information in the verification request message matches locally stored attribute information associated with the address to be verified.

3. The method according to claim 2, wherein verifying whether the attribute information in the verification request message matches the locally stored attribute information associated with the address to be verified comprises one of:
verifying whether the attribute information in the verification request message is consistent with the locally stored attribute information associated with the address to be verified;
verifying whether the attribute information in the verification request message is a subset of the locally stored attribute information associated with the address to be verified.

4. The method according to claim 1, wherein the verification result message comprises one of:
a verification success message, wherein the verification success message carries at least one of: a success indicator and the attribute information in the verification request message;
a verification failure message, wherein the verification failure message carries at least one of: a failure indicator, entire or partial failure indication information, failure cause information, and the locally stored attribute information associated with the address to be verified.

5. The method according to claim 1, wherein the verification request message and the verification result message carry index information, wherein the index information is used for associating the verification result message with the verification request message.

6. The method according to claim 1, wherein the verification request message is an Internet Control Message Protocol, ICMP-based message, or is carried in an Internet Protocol version 6, IPv6, packet header.

7. The method according to claim 6, wherein the ICMP-based message comprises one of:
a first ICMP message, wherein an extension object in the first ICMP message is defined to carry the attribute information;
a second ICMP message, wherein the second ICMP message is defined to carry the attribute information.

8. The method according to claim 6, wherein in a case where the verification request message is the ICMP-based message,
in an Internet Protocol version 4, IPv4, or IPv6 scenario, the address to be verified serves as a destination address of the ICMP-based message; or
in a Segment Routing over IPv6 dataplane, SRv6, scenario, the ICMP-based message is carried in a packet as a payload, and the address to be verified serves as a last SRv6 Segment Identifier, SID, to be processed in a segment list of a Segment Routing Header, SRH, of the packet; or
in an SRv6 scenario, the ICMP-based message is carried in a packet as a payload, the address to be verified serves as a non-last SRv6 SID to be processed in a segment list of an SRH of the packet, and the SRH carries first indication information, wherein the first indication information is used for instructing a receiving node, of which a local address is consistent with the address to be verified, to still read the payload in a case where the number of addresses which have been not processed in the segment list is not 0; or
in an SRv6 scenario, the ICMP-based message is carried in a packet as a payload, the address to be verified serves as a non-last SRv6 SID to be processed in a segment list of an SRH of the packet, and a previous address of the address to be verified carries second indication information, wherein the second indication information is used for instructing a receiving node, of which a local address is consistent with the address to be verified, to read the payload.

9. The method according to claim 8, wherein the SRH carries the first indication information in one of the following manners:
carrying the first indication information in an extension bit of a Flag field of the SRH;
carrying the first indication information in an SRH Type-Length-Value, TLV, of the SRH;
carrying the first indication information in a Hop-By-Hop Options Header, HBH, option of the SRH;
carrying the first indication information in a Destination Options Header, DOH, option of the SRH.

10. The method according to claim 8, wherein the previous address of the address to be verified carries the second indication information in a following manner:
the previous address of the address to be verified carries the second indication information through a network programming function.

11. The method according to claim 6, wherein the verification request message is carried in the IPv6 packet header in one of the following manners:
the verification request message is carried in an IPv6 Routing Header, RH, as a Type-Length-Value, TLV, wherein a value of Type in the TLV is set to be equal to a preset value used for indicating that the TLV carries the attribute information;
the verification request message is carried in a Destination Options Header, DOH, wherein a value of an Option Type in the DOH is set to be equal to a preset value used for indicating that the DOH carries the attribute information;
the verification request message is carried in a Hop-By-Hop Options Header, HBH, wherein a value of an Option Type in the HBH is set to be equal to a preset value used for indicating that the HBH carries the attribute information;
the verification request message is carried in an extension header dedicated to attribute verification.

12. The method according to claim 11, wherein in a case where the verification request message is carried in the DOH or the HBH,
the DOH or the HBH that carries the verification request message is placed before the RH; or,
the DOH or the HBH that carries the verification request message is placed after the RH.

13. The method according to claim 1, wherein the verification result message is an Internet Control Message Protocol, ICMP-based message or is carried in an Internet Protocol version 6, IPv6, packet header.

14. The method according to claim 13, wherein the ICMP-based message comprises one of:
a first ICMP message, wherein an extension object in the first ICMP message is defined for carrying a verification result;
a second ICMP message, wherein the second ICMP message is defined to carry a verification result.

15. The method according to claim 13, wherein the verification result message is carried in the IPv6 packet header in one of the following manners:
the verification result message is carried in an IPv6 Routing Header, RH, as a Type-Length-Value, TLV, wherein a value of Type in the TLV is set to be equal to a preset value used for indicating that the TLV carries a verification result;
the verification result message is carried in a Destination Options Header, DOH, wherein a value of an Option Type in the DOH is set to be equal to a preset value used for indicating that the DOH carries a verification result;
the verification result message is carried in a Hop-By-Hop Options Header, HBH, wherein a value of an Option Type in the HBH is set to be equal to a preset value used for indicating that the HBH carries a verification result;
the verification result message is carried in an extension header dedicated to attribute verification.

16. The method according to any one of claims 1-15, wherein the verification request message comprises one or more addresses to be verified, and types of the addresses to be verified comprise an Internet Protocol, IP, address and/or a Segment Routing over IPv6 dataplane, SRv6.

17. The method according to any one of claims 1-15, wherein after receiving the verification request message, the method further comprises one of:
forwarding the verification request message according to an address list corresponding to the verification request message;
discarding the verification request message in a case where validity check of the verification request message fails.

18. The method according to any one of claims 1-15, wherein in a case where the verification request message comprises multiple addresses to be verified and multiple pieces of attribute information, the verification request message further comprises:
indication information used for indicating, among the multiple pieces of attribute information, attribute information that needs to be verified by a node corresponding to each address to be verified.

19. The method according to any one of claims 1-15, wherein the attribute information comprises at least one of:
a network programming function type;
Service Function, SF, information;
a Segment Routing, SR, proxy type;
slice information;
resource information;
path intent information;
Virtual Private Network, VPN, service information;
algorithm information; and
a Multi-Topology Identifier, MT-ID.

20. An information verification method, comprising:
sending a verification request message, wherein the verification request message comprises an address to be verified and attribute information; and
receiving a verification result message returned after the attribute information is verified based on the address to be verified.

21. The method according to claim 20, wherein before sending the verification request message, the method further comprises:
sending an attribute information acquisition request to a database or a controller, so as to acquire the attribute information associated with the address to be verified.

22. The method according to claim 20, wherein the verification request message and the verification result message carry index information, wherein the index information is used for associating the verification result message with the verification request message.

23. The method according to claim 22, wherein after receiving the verification result message returned after the attribute information is verified based on the address to be verified, the method further comprises:
determining, according to the index information carried in the verification result message, the verification request message corresponding to the verification result message;
determining a verification result corresponding to the verification request message according to the verification result message.

24. The method according to claim 20, wherein the verification request message is an Internet Control Message Protocol, ICMP-based message, or is carried in an Internet Protocol version 6, IPv6, packet header.

25. An information verification device, comprising:
a reception module, configured to receive a verification request message, wherein the verification request message comprises an address to be verified and attribute information; and
a verification module, configured to verify the attribute information based on the address to be verified, and send a verification result message.

26. An information verification device, comprising:
a sending module, configured to send a verification request message, wherein the verification request message comprises an address to be verified and attribute information; and
a reception module, configured to receive a verification result message returned after the attribute information is verified based on the address to be verified.

27. A computer-readable storage medium storing a computer program, wherein the computer program, when executed by a processor, causes the processor to implement the operations of the method according to any one of claims 1-19, or the operations of the method according to any one of claims 20-24.

28. An electronic device, comprising a memory, a processor, and a computer program stored in the memory and capable of running on the processor, wherein the processor, when executing the computer program, implements the operations of the method according to any one of claims 1-19, or the operations of the method according to any one of claims 20-24.
